# FASCICULE DE BREVET EUROPEEN

(11) **EP 2 519 360 B1**
(45) Date de publication et mention de la délivrance du brevet: **30.11.2016**
(21) Numéro de dépôt: 10807713.2
(22) Date de dépôt: 28.12.2010
(51) Int. Cl.: B05B 13/02, B05B 15/12, B25H 1/00, F16M 11/12

(54) **PROCÉDÉ DE TRAITEMENT SURFACIQUE DE PIÈCES DE GRANDES DIMENSIONS, PRÉHENSEUR DE PIÈCES ADAPTÉ POUR LA MISE EN OEUVRE D'UN TEL PROCÉDÉ, UTILISATION DE CE PRÉHENSEUR ET CABINE DE TRAITEMENT**
VERFAHREN ZUR OBERFLÄCHENBEHANDLUNG VON BREITEN TEILEN, ZUR UMSETZUNG DIESES VERFAHRENS GEEIGNETER GREIFER ODER TEILE, VERWENDUNG DES GREIFERS UND BEHANDLUNGSKABINE
METHOD FOR THE SURFACE TREATMENT OF LARGE PARTS, GRIPPER OF PARTS SUITABLE FOR IMPLEMENTING SUCH A METHOD, USE OF SAID GRIPPER AND TREATMENT CUBICLE

(30) Priorité: 29.12.2009 FR 0959647
(43) Date de publication de la demande: 07.11.2012
(73) Titulaire: Compagnie Plastic Omnium, 69007 Lyon (FR)
(72) Inventeur: TRESSE, David, F-70210 Polaincourt (FR)
(74) Mandataire: Remy, Vincent Noel Paul
(86) Numéro de dépôt international: PCT/FR2010/052927
(87) Numéro de publication internationale: WO 2011/080484

(56) Documents cités:
- EP-A1- 2 072 145
- EP-A2- 1 745 858
- DE-B3-102007 063 162
- US-A1- 2008 142 652
- US-B1- 6 173 947

## Description

La présente invention concerne un procédé de traitement surfacique de pièces de grandes dimensions, notamment de pièces de carrosserie automobile.

La peinture de pièces de carrosserie s'effectue habituellement par projection locale de peinture en gouttelettes ou en particules solides sur les pièces à peindre, ces dernières étant portées par des supports mobiles qui défilent devant des postes de projection de peinture en présentant les pièces dans une orientation constante adaptée à leur traitement. En d'autres termes, les pièces sont déplacées par translation pendant les opérations de peinture et pendant leur trajet d'un poste de peinture à un poste suivant, tandis que des robots ou des opérateurs déplacent des buses de projection locale de peinture devant les pièces en translation.

Ce procédé, éprouvé depuis plusieurs années, est considéré comme optimal et a été presque unanimement adopté dans l'industrie.

Pourtant, bien que fournissant un résultat de qualité, il engendre de petites imperfections. De nos jours, ces petites imperfections ne sont pas considérées comme gênantes, mais des attentes de qualité toujours croissantes pourraient conduire à des exigences supérieures dans l'avenir.

Dans la présente description, on entend par « traitement surfacique » toute étape d'un procédé global de traitement de surface d'une pièce. Ce procédé global peut consister en une peinture de la pièce, auquel cas les procédés de traitement surfacique possibles sont le nettoyage (par soufflage ou par cryogénie), le flammage, l'application de primaire, l'application de base de couleur, l'application de vernis, ou un traitement de finition sans peinturé, comme uniquement une application de vernis, ou encore un contrôle qualité de la pièce, auquel cas le traitement local consiste à filmer des parties prédéfinies de la pièce pour envoyer des images à un dispositif d'analyse d'images, ou encore une dépose d'un joint ou d'un cordon de colle sur un tracé prédéfini.

Pour procéder au traitement surfacique précité, on utilise un dispositif de traitement local, par exemple une caméra s'il s'agit d'un procédé de contrôle qualité ou une buse de projection de peinture s'il s'agit d'appliquer une peinture sur la pièce.

EP 1 745 858 divulgue un procédé de peinture de pièces qui n'est pas adapté à des pièces de grandes dimensions présentant une certaine souplesse.

La présente invention vise à proposer un nouveau procédé de traitement surfacique qui améliore encore la qualité du traitement et/ou des pièces obtenues et procure, parallèlement, d'autres avantages sur le plan industriel.

La présente invention a pour objet un procédé de traitement surfacique de pièces de grandes dimensions présentant une certaine souplesse qui les rend géométriquement instables en cas de déplacement, à l'aide d'au moins un dispositif de traitement local, procédé dans lequel une pièce ayant une surface à traiter est déplacée devant le dispositif de traitement local avec sa surface à traiter orientée vers le dispositif de traitement local, caractérisé en ce que la pièce est saisie au bout d'un bras d'un robot, le dispositif de traitement local est maintenu fixe par rapport au robot, la pièce est déformée en lui imposant une configuration déformée dans laquelle ses parties déformables imposent une géométrie stable à l'ensemble de la pièce, et la pièce est déplacée par le bras du robot par rapport au dispositif de traitement local de manière à faire passer l'intégralité de sa surface à traiter devant le dispositif de traitement local en maintenant la pièce dans la configuration déformée.

Dans un mode de mise en oeuvre particulier, le dispositif de traitement local est un des dispositifs suivants : buse de projection de peinture ou de vernis, chalumeau de flammage, injecteur d'air comprimé servant à décoller les poussières (nettoyage par soufflage), tête de projection de dioxyde de carbone (CO₂) liquide servant à décoller les poussières et à dégraisser les pièces (nettoyage par cryogénie), caméra de contrôle qualité.

L'invention revient à rendre immobile le dispositif de traitement local qui était mobile dans l'état de la technique et à faire bouger la pièce autour du dispositif de traitement local.

De prime abord, cette inversion peut sembler saugrenue car elle consiste à mettre en mouvement l'objet le plus encombrant et à garder immobile le moins encombrant, mais ce serait sans compter l'amélioration des conditions de traitement local, qui sont bien plus homogènes sur l'ensemble d'une pièce traitée avec le procédé selon l'invention.

A posteriori, les inventeurs expliquent cette amélioration, notamment en ce qui concerne la peinture de pièces, par le fait que, dans l'état de la technique, la buse est constamment en mouvement, ce qui empêche le jet de peinture d'atteindre un régime permanent propice à son application homogène. En outre, dans l'état de la technique, la direction de pulvérisation varie constamment, alors que le jet de peinture se trouve dans un courant d'air vertical dirigé vers le bas (nécessaire pour limiter la dispersion de la peinture en dehors de la zone de travail) et dans le champ vertical de la pesanteur dirigé lui aussi vers le bas. Ainsi, les conditions mécaniques de la pulvérisation varient elles aussi constamment.

Le résultat procuré par l'invention, lorsque le traitement local consiste à projeter des gouttelettes ou des particules solides, est une meilleure homogénéité des formes, positions et densités des gouttelettes ou particules solides au moment de leur impact avec la surface à traiter, ce qui fournit une couche d'épaisseur constante, avec un tendu et une brillance maximales.

Le procédé est particulièrement performant en cas de déplacements rapides et saccadés imposés par des contraintes industrielles

En outre, les conditions d'application de la peinture étant améliorées, le coefficient de transfert de la peinture est lui aussi amélioré, ce qui se traduit par une diminution de la quantité de peinture perdue, c'est-à-dire une économie de matière.

Dans un mode de mise en oeuvre particulier de l'invention, on projette les gouttelettes ou particules solides de peinture selon la direction verticale, du haut vers le bas, c'est-à-dire dans le même sens que la pesanteur et le courant d'air.

Un premier avantage de cette mise en oeuvre est que les gouttelettes ou particules solides conservent leur densité, leurs formes et dimensions optimales pour obtenir une bonne qualité de peinture.

Un deuxième avantage est que l'immobilité de la buse de projection de peinture permet d'utiliser un dispositif qui n'est pas nécessairement léger, ni flexible, ni compact, ce qui élargit la gamme de dispositifs utilisables à cet effet et autorise en conséquence un choix de matériel déterminé uniquement par le critère de qualité de l'application de peinture. De même, il n'est plus nécessaire que le réseau d'approvisionnement en peinture soit capable de suivre les mouvements du dispositif de projection, puisque celui-ci est fixe.

Grâce à l'invention, l'installation industrielle requise pour traiter les pièces occupe une place réduite par rapport à une chaine de traitement traditionnelle. En effet, les pièces à nettoyer, mettre en peinture, contrôler ou encoller, en étant manipulées manipulées par robot, ne sont plus déplacées par convoyeur devant des postes successifs mais restent dans une cabine de traitement pour subir des traitements tels que nettoyage, flammage, application de primaire, application de bases couleur, application de vernis, contrôle qualité, dépose de colle. De plus, les temps de pause entre deux traitements, par exemple séchage, désolvation ou flash-off, sont respectés en déposant la pièce sur un support, alors que, dans l'état de la technique, un temps de pause se traduisait par un allongement du convoyeur.

Dans un mode de mise en oeuvre particulier, on saisit chaque pièce par ses parties les plus déformables. Dans le cas particulier des peaux de pare-chocs avec crosses (les crosses étant des retours latéraux de la peau s'étendant sensiblement perpendiculairement à la face frontale de la peau), on saisit la peau de pare-chocs par les crosses et on « tend » la peau comme un arc pour la stabiliser géométriquement.

L'invention sera mieux comprise à la lecture de la description qui va suivre, donnée uniquement à titre d'exemple et faite en se référant aux dessins dans lesquels :
- la figure 1 est une vue en perspective d'une cabine de peinture selon un premier mode de réalisation.
- la figure 2 est une vue en coupe de la pièce au repos, juste avant sa préhension par le robot,
- les figures 3 à 5 sont des vues analogues à la figure 2, montrant respectivement la pièce au début de sa préhension, au début de sa déformation et à la fin de sa mise en géométrie stable,

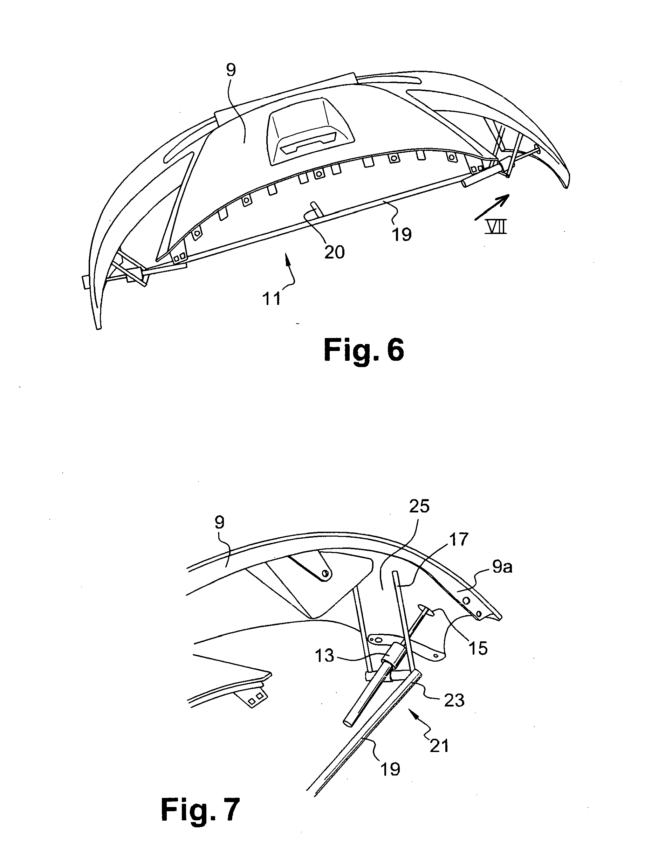

- la figure 6 est une vue en perspective de la pièce après déformation, correspondant à la figure 5,
- la figure 7 est une vue rapprochée selon la flèche VII de la figure 6,
- la figure 8 est une vue en perspective d'une cabine de peinture selon un autre mode de réalisation et
- la figure 9 est une vue analogue à la figure 8, dans laquelle les pièces ont été représentées transparentes de manière à laisser voir les parties invisibles sur la figure 8.

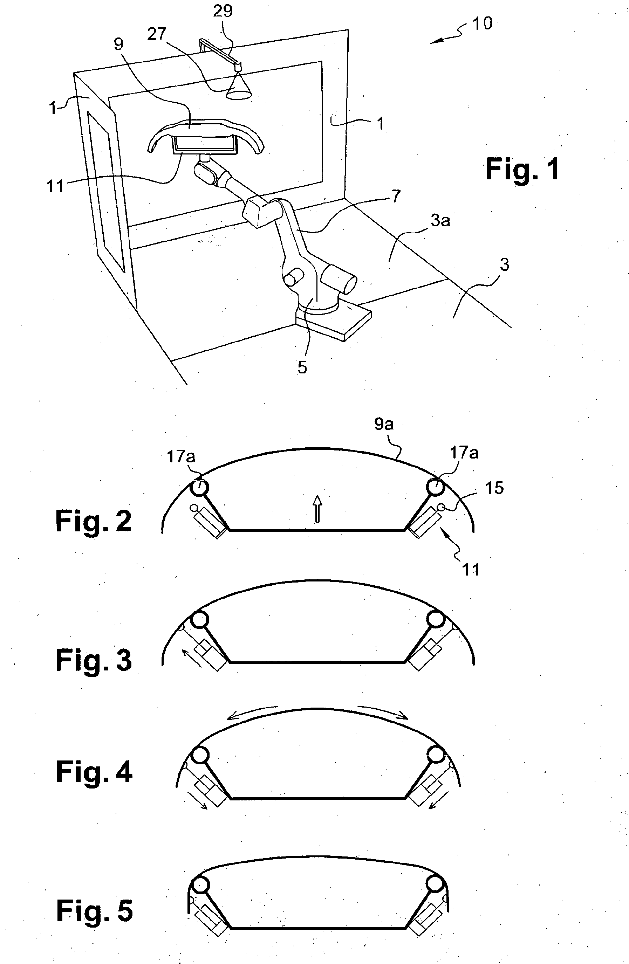

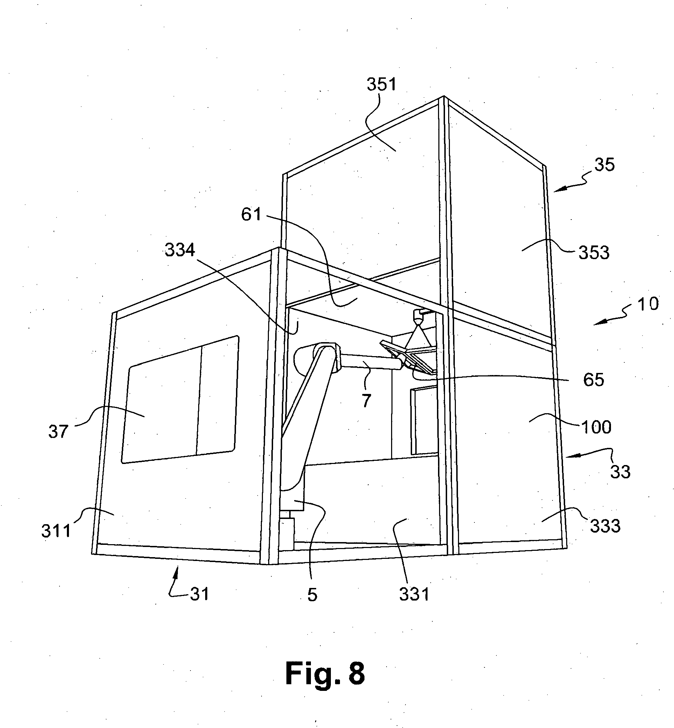

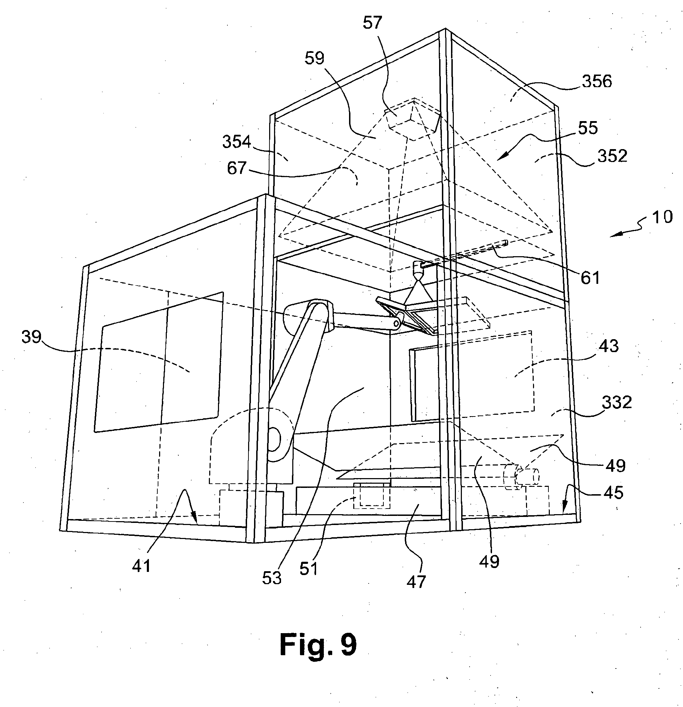

Sur la figure 1, on voit une cabine de peinture comprenant des cloisons verticales 1, un plafond (non représenté) et un sol 3, dont une partie grillagée 3a correspond à une aspiration d'air. Une cabinet plus complète, constituée de trois parties, sera décrite en référence aux figures 8 et 9. La cabine comprend une enceinte comprenant une installation de peinture 10.

Le sol 3 supporte un robot manipulateur 5 ayant un bras mobile 7 à six degrés de liberté. Un tel robot est répandu dans l'industrie automobile et ne sera pas décrit ici. A titre d'exemple, le modèle P250 de la société FANUK convient pour la mise en oeuvre de l'invention. Le robot porte une pièce de grandes dimensions qui est ici une peau de pare-chocs 9.

L'extrémité du bras 7 porte un préhenseur « universel », qui est composé d'une structure 11, de deux vérins pneumatiques 13, de deux ventouses 15 constituant des prises et de quatre appuis 17.

Ce préhenseur est qualifié d'universel du fait qu'il est utilisable, sans réglage spécifique, avec plusieurs pièces différentes d'une même campagne de production. Ainsi, des peaux de pare-chocs de deux ou trois modèles différents, produites au même moment, peuvent toutes être manipulées par le robot sans qu'il soit nécessaire de régler le préhenseur entre deux pièces. Le réglage du préhenseur n'est requis que pour le préparer à manipuler d'autres pièces d'une autre campagne de production. On règle alors l'ouverture angulaire de la structure 11, la course des vérins 13 ou la longueur des appuis 17.

La structure 11 est réalisée en acier (elle pourrait aussi, à titre d'exemples, être en aluminium ou en carbone) et comprend une barre 19 dont les deux extrémités coudées 21 portent les vérins pneumatiques 13, articulés de manière à pouvoir pivoter autour des branches 23 à angle droit de la barre 19. Au milieu de la barre 19, une poignée 20 permet la fixation du préhenseur à l'extrémité du bras 7 du robot.

Sur chacune de ces branches 23, les deux appuis fixes 17 sont formés par des tiges soudées à la branche 23 en étant orientés de manière que leurs extrémités libres viennent au contact de la face interne 25 de la peau de pare-chocs 9, comme cela sera mieux décrit en référence aux figures 2 à 5.

Comme on le voit sur la figure 1, le bras mobile 7 est capable, grâce au préhenseur universel, de présenter la peau de pare-chocs 9 devant un dispositif de projection 27 situé à distance du plafond de la cabine et alimenté en peinture par une conduite rigide 29. Ce dispositif de projection 27 est fixe et positionné de façon qu'une pièce puisse être orientée et placée avec sa partie à traiter en face du dispositif de projection.

Le flux de gouttelettes de peinture projeté par le dispositif 27 est envoyé par le dispositif 27 dans la direction verticale, de haut en bas, sur la peau de pare-chocs. Le flux est donc orienté comme le flux d'air entrant dans la grille 3a et comme la pesanteur (gravité). Il bénéficie donc de conditions optimales pour s'appliquer de façon homogène sur toute la surface à peindre de la peau de pare-chocs.

La surface à peindre est la face externe de la peau de pare-chocs. Elle est recouverte d'une couche homogène de peinture grâce au fait que le bras 7 déplace la peau de pare-chocs 9 de manière à présenter chaque portion à peindre de cette surface à bonne distance et pendant un temps d'exposition approprié.

Ces déplacements de la peau de pare-chocs provoquent des à-coups qu'il faut, conformément à l'invention, éliminer pour éviter des défauts dans la couche finale de peinture. A cet effet, on stabilise les crosses de la peau de pare-chocs en suivant les étapes illustrées par les figures 2 à 5.

Sur la figure 2, la peau de pare-chocs 9 est au repos. Ses crosses 9a constituent ses parties les plus déformables. On approche le châssis de la face intérieure de la peau jusqu'à mettre les extrémités libres 17a des appuis 17 au contact de la peau.

A l'étape suivante (figure 3), on actionne les vérins pneumatiques 11 de manière à venir appliquer les ventouses 15 contre les faces intérieures des crosses, puis on aspire de l'air dans chaque ventouse (comme cela est bien connu), pour réaliser la prise de la pièce par ses crosses.

Lors de l'étape illustrée par la figure 4, on actionne les vérins pneumatiques 11 en sens inverse, pour « tendre » la peau de pare-chocs en lui imposant une configuration déformée grâce à laquelle la peau de pare-chocs atteint une certaine rigidité dans son intégralité.

Une fois les vérins rentrés, la peau de pare-chocs a atteint la position de la figure 5 et un niveau de rigidité suffisant pour pouvoir supporter des à-coups sans de déformer.

En particulier, la peau peut supporter des mouvements rapides imposés par le bras manipulateur pendant les opérations de projection de peinture.

La peau de pare-chocs peut ainsi être présentée par le bras manipulateur devant le dispositif de projection de manière que sa face externe reçoive une couche homogène de peinture (sauf aux endroits non destinés à être peints).

Il est à noter que l'on n'observe aucune trace de coulure sur la pièce ainsi peinte, alors qu'on aurait pu craindre que les changements d'orientation fréquents de la peau de pare-chocs n'engendrent assez facilement de telles coulures.

Sur les figures 8 et 9, on a représenté une cabine de peinture selon un autre mode de réalisation de l'invention, pour le traitement de mise en peinture d'une pièce 100. Cette cabine est constituée par trois enceintes 31, 33, 35 dont les dimensions sont identiques à celles de containers de transport. La cabine comprend également une installation de peinture 10.

Des dimensions standard de containers sont 2,44 m de large et 2,59 m de haut, pour des containers de 3 m, 6 m et 12 m de long. Les trois enceintes des figures 8 et 9 ont des longueurs de 3 m, mais tous les types connus sont utilisables, moyennant éventuellement une nouvelle répartition des éléments dans les différents containers.

Les cabines peuvent être assemblées entre elles par vissage et jointoiement.

Pour les réaliser, on peut partir de containers que l'on modifie en en retirant certaines parois ou en découpant lesdites parois, puis en y ajoutant les éléments qui vont être décrits.

La première enceinte 31 contient le robot 5. Elle est munie à cet effet de raccordements électriques (non représentés) pour l'alimentation du robot et l'éclairage de la cabine.

Une fenêtre 37 est aménagée dans la paroi fermée d'une des grandes faces latérales 311, ce qui permet de vérifier le bon fonctionnement de la cabine, tandis que la grande face latérale opposée est entièrement évidée. Les petites faces latérales sont, pour l'une, à demi-fermée par une cloison 39 s'étendant depuis la grande face évidée jusqu'à mi-distance de la grande face à fenêtre 311, et pour l'autre, totalement évidée.

L'enceinte 31 comporte un plancher 41 sur sa face inférieure mais pas de plafond sur sa face supérieure.

La deuxième enceinte 33 est juxtaposée à la première, avec une de ses grandes faces latérales 331, qui est évidée aux trois quarts supérieurs, accolée à la grande face évidée de la première enceinte 31. Comme on le voit sur le dessin, cette ouverture permet au bras manipulateur 7 du robot 5 de pénétrer dans la deuxième enceinte 33 pour y déplacer la pièce à peindre 100.

L'autre grande face latérale 332 de la deuxième enceinte 33 est fermée par une paroi munie d'une fenêtre 43 identique à la fenêtre 37 de la première enceinte 31. Les deux petites faces latérales 333 et 334 de l'enceinte sont fermées par des parois pleines.

Sur le plancher 45 fermant la face inférieure de la deuxième enceinte 33, est disposé un bac de rétention 47 surmonté de deux plans inclinés 49 à écoulement d'eau dont la fonction, bien connue, est de récupérer les gouttelettes ou particules solides de peinture qui n'ont pas atteint la surface à peindre d'une pièce.

Une bouche 51 d'aspiration d'air se situe à hauteur du plancher 45 et communique avec une cheminée 53 remontant, le long de la petite face 334 de l'enceinte, jusqu'à la face supérieure ouverte de l'enceinte 33.

Cette enceinte 33 est équipée également de raccords (non représentés) pour son raccordement au réseau d'eau (alimentation et filtration) et au réseau électrique pour l'éclairage.

La troisième enceinte 35 est posée sur la deuxième. Elle comporte deux grandes faces latérales 351 et 352, l'une fermée aux quatre cinquièmes supérieurs, l'autre entièrement fermée, et deux petites faces latérales 353 et 354 entièrement fermées. La face inférieure de l'enceinte est ouverte, tandis que sa face supérieure comporte un plafond 356.

La troisième enceinte 35 contient une hotte 55 d'arrivée d'un flux d'air, constituée par :
- un raccord 57 à un réseau d'air pulsé (ou une bouche à ventilateur), traversant le plafond de l'enceinte,
- une chambre prismatique 59 s'étendant du raccord 57 jusqu'aux parois latérales 351, 352, 353 et 354, au pied de la paroi de la grande face latérale 351, et
- une grille d'air 61 parallèle à la face inférieure 355 et fermant la chambre prismatique 59.

La grille d'air 61, située au dessus de la deuxième enceinte 33, constitue le plafond de la zone de projection de peinture.

En effet, sous cette grille 61, la troisième enceinte 35 contient le dispositif de projection de peinture, constitué ici par une conduite 63 et un applicateur 65. Des tuyaux (non représentés) permettent l'alimentation en peinture du dispositif de projection.

La troisième enceinte contient aussi une cheminée 67 qui prolonge, jusqu'à son plafond 356, la cheminée 53 de la deuxième enceinte 33. Un raccord 69 à un réseau d'aspiration d'air à filtrer traverse la paroi de la face supérieure 356.

Ainsi assemblées, les trois enceintes 31, 33 et 35 constituent une cabine de peinture complète, capable de traiter efficacement et avec un bon niveau de qualité des pièces à peindre de différentes formes.

De façon optionnelle, une quatrième enceinte (non représentée) peut venir compléter l'ensemble pour délimiter une zone de dépose (séchage, flash-off ou autre) ou encore une cinquième enceinte (non représentée) peut délimiter une zone d'étuvage.

On comprend que la cabine ainsi constituée est facilement démontable et transportable, pour être réutilisée des usines différentes, et/ou re-configurable par des réorganisations "modulaires", pour s'adapter à de nouveaux produits à traiter.

In est bien entendu que les modes de mise en oeuvre qui viennent d'être décrits ne présentent aucun caractère limitatif et qu'ils pourront recevoir toute modification désirable sans sortir du cadre défini par les revendications annexées.

## Revendications

1. Procédé de peinture de pièces de grandes dimensions présentant une certaine souplesse qui les rend géométriquement instables en cas de déplacement, par projection de peinture en gouttelettes ou en particules solides à l'aide d'au moins un dispositif de projection de peinture (27), procédé dans lequel une pièce 9) ayant une surface à peindre (25) est déplacée devant le dispositif de projection (27) avec sa surface à peindre (25) orientée vers le dispositif de projection (27),
**caractérisé en ce que**
- on saisit la pièce (9) au bout d'un bras (7) d'un robot (5),
- on maintient le dispositif de projection (27) fixe par rapport au robot (5),
- on déforme la pièce (9) en lui imposant une configuration déformée dans laquelle ses parties déformables imposent une géométrie stable à l'ensemble de la pièce (9),
- on déplace la pièce (9) par rapport au dispositif de projection (27) de manière à faire passer l'intégralité de sa surface à peindre (25) devant le dispositif de projection (27) en maintenant la pièce (9) dans la configuration déformée.

2. Procédé selon la revendication 1, dans lequel on projette la peinture selon la direction verticale du haut vers le bas.

3. Procédé selon l'une des revendications 1 et 2" dans lequel on saisit chaque pièce par ses parties les plus déformables (9a).

4. Procédé selon l'une quelconque des revendications précédentes, appliqué à des peaux de pare-chocs (9) avec crosses (9a), les crosses étant des retours latéraux de la peau s'étendant sensiblement perpendiculairement à la face frontale de la peau, dans lequel on saisit une peau de pare-chocs par les crosses et on « tend » la peau comme un arc pour la stabiliser géométriquement.

## Patentansprüche

1. Verfahren zum Lackieren von großflächigen Teilen, die eine gewisse Flexibilität aufweisen, die sie beim Bewegen geometrisch instabil werden lässt, durch Besprühen mit Lack in Tröpfchen oder in festen Partikeln mit Hilfe mindestens einer Lacksprühvorrichtung (27), wobei bei dem Verfahren ein Teil (9) mit einer zu lackierenden Oberfläche (25) mit seiner zu lackierenden Oberfläche (25), die zu der Sprühvorrichtung (27) hin weist, vor der Sprühvorrichtung (27) bewegt wird,
**dadurch gekennzeichnet, dass**
- das Teil (9) am Ende eines Armes (7) eines Roboters (5) ergriffen wird,
- die Sprühvorrichtung (27) relativ zu dem Roboter (5) ortsfest gehalten wird,
- das Teil (9) verformt wird, indem ihm ein verformter Zustand verliehen wird, in dem seine verformbaren Teile dem gesamten Teil (9) eine stabile Geometrie verleihen,
- das Teil (9) relativ zu der Sprühvorrichtung (27) in der Form bewegt wird, dass seine gesamte zu lackierende Oberfläche (25) vor der Sprühvorrichtung (27) vorbeigeführt wird, wobei das Teil (9) im verformten Zustand gehalten wird.

2. Verfahren nach Anspruch 1, bei dem der Lack in der vertikalen Richtung von oben nach unten gesprüht wird.

3. Verfahren nach einem Ansprüche 1 und 2, bei dem jedes Teil über seine am meisten verformbaren Teile (9a) ergriffen wird.

4. Verfahren nach einem der vorhergehenden Ansprüche 1, das auf die Haut von Stoßfängern (9) mit Kröpfungen (9a) angewendet wird, wobei die Kröpfungen seitliche Rücksprünge der Haut sind, die sich im Wesentlichen senkrecht zu der vorderen Fläche der Haut erstrecken, wobei bei dem Verfahren eine Stoßfängerhaut über die Kröpfungen ergriffen wird und die Haut wie ein Bogen "gespannt" wird, um sie geometrisch zu stabilisieren.

## Claims

1. A method of painting parts of large dimensions that present a certain amount of flexibility causing them to be unstable in shape when moved, the parts being painted by spraying droplets or solid particles using at least one paint spray device (27), in which method, a part (9) having a surface (25) for painting is moved in front of the spray device (27) with its surface (25) for painting facing towards the spray device (27), the method being **characterized by** the following steps:
· gripping the part (9) at the end of an arm (7) of a robot (5);
· keeping the spray device (27) stationary relative to the robot (5);
· deforming the part (9) by imparting a deformed configuration thereto in which its deformable portions cause the part (9) as a whole to take up a stable shape; and
· moving the part (9) relative to the spray device (27) so as to pass all of its surface (25) for painting in front of the spray device (27) while the part (9) is being held in the deformed configuration.

2. A method according to claim 1, wherein the paint is sprayed downwards in the vertical direction.

3. A method according to claim 1 or claim 2, wherein each part is gripped via its most deformable portions (9a).

4. A method according to any preceding claim, applied to bumper skins (9) with overriders (9a), the overriders being side portions of the skin extending substantially perpendicularly to the front face of the skin, and the bumper skin being gripped via its overriders and the skin being "stretched" like a bowl in order to stabilize its shape.
